# EUROPÄISCHE PATENTSCHRIFT

(11) **EP 1 243 378 B1**
(45) Veröffentlichungstag und Bekanntmachung des Hinweises auf die Patenterteilung: **02.05.2003**
(21) Anmeldenummer: 01107125.5
(22) Anmeldetag: 22.03.2001
(51) Int. Cl.: B23Q 11/00

(54) **Werkzeugmaschine**
Machine tool
Machine outil

(43) Veröffentlichungstag der Anmeldung: 25.09.2002
(73) Patentinhaber: Hüller Hille GmbH, 71636 Ludwigsburg (DE)
(72) Erfinder: Stengele, Gerald, 71636 Ludwigsburg (DE); Geiger, Dietrich, 71723 Grossbottwa (DE)
(74) Vertreter: Rau, Manfred, Dr. Dipl.-Ing.

(56) Entgegenhaltungen:
- DE-A- 2 934 276
- US-A- 4 190 774

## Beschreibung

Die Erfindung betrifft eine Werkzeugmaschine gemäß Oberbegriff von Patentanspruch 1, siehe DE-A 2 934 276.

Bei Werkzeugmaschinen sind häufig Werkzeug-Träger oder Werkstück-Träger, die selber wieder an Tragelementen angeordnet sind, in einer vertikalen Ebene in zwei Achsen, also einer horizontalen x-Richtung und einer vertikalen y-Richtung, zu bewegen, wobei das Tragelement mit dem Werkzeug-Träger oder Werkstück-Träger, die nachfolgend auch lediglich als Träger bezeichnet werden, gegen eine Gewichtskraft angehoben oder unter Auffangen der Gewichtskraft abgesenkt wird. Unter Trägern im Sinne der Erfindung werden also beispielsweise nicht nur Werkzeug-Träger verstanden, an denen beispielsweise mittels einer drehantreibbaren Spindel rotierende, in der Regel spanabhebende Werkzeuge angebracht sind, sondern auch Werkstück-Träger, an denen Handhabungs- oder Spannwerkzeuge zum Halten von Werkstücken bei der Bearbeitung angebracht sind. Der Begriff Werkzeugmaschine umfaßt also auch solche mit Spannwerkzeugen oder Handhabungswerkzeugen mit der zuvor geschilderten zwei-achsigen Bewegung in einer vertikalen Ebene.

Zum Ausgleich der vertikalen Gewichtskräfte sind Ausgleichs-Einrichtungen bekannt, die eingesetzt werden, um die Investitions- und Betriebskosten von ansonsten erforderlichen, größer dimensionierten Antriebssystemen einzusparen. Insbesondere bei hochdymanischen Werkzeugmaschinen hat sich ein solcher Gewichtsausgleich mittels druckmittelbeaufschlagter Zylinder weitgehend durchgesetzt. Durch einen solchen Gewichtsausgleich soll die durch das Gewicht der vertikal bewegten Teile ausgeübte Gewichtskraft weitestgehend kompensiert werden. Derartige Gewichtsausgleichssysteme nach dem Stand der Technik haben in der Regel erheblichen Einfluß auf die Gestaltung der Struktur der Werkzeugmaschine. Wenn bei einer mit einem Kreuzschlitten ausgerüsteten Werkzeugmaschine, beispielsweise einem Hochgeschwindigkeits-Bearbeitungszentrum, ein solcher Gewichtsausgleich erfolgen soll, dann treten grundlegende Probleme auf.

Wenn der horizontal bewegbare x-Schlitten direkt am Maschinen-Gestell geführt wird und auf diesem ein vertikal verschiebbarer y-Schlitten angebracht wird, muß nur die vom y-Schlitten und dem Werkzeug- oder Werkstück-Träger ausgeübte Gewichtskraft kompensiert werden. Die entsprechende Einrichtung zum Ausgleich der Gewichtskraft kann also entsprechend klein ausgebildet werden. Nachteilig hierbei ist aber, daß die Einrichtung zum Gewichtsausgleich mit dem x-Schlitten in x-Richtung zu bewegen ist, wodurch zusätzliche konstruktive Maßnahmen erforderlich sind, die wiederum zur Erhöhung der insgesamt in x-Richtung bewegten Masse führen. Dies verringert wiederum die Dynamik des Antriebes des x-Schlittens.

Wenn dagegen der vertikal bewegbare y-Schlitten direkt am Maschinen-Gestell geführt wird und der horizontal verschiebbare x-Schlitten auf dem y-Schlitten angeordnet wird, dann muß eine Einrichtung zum Ausgleich der Gewichtskraft zwischen dem y-Schlitten und dem Maschinen-Gestell wirken. Hierbei ist zwar der Vorteil gegeben, daß die Einrichtung zum Ausgleich der Gewichtskraft ortsfest angeordnet ist und damit keine unmittelbaren nachteiligen Einwirkungen auf die Dynamik der Bewegung des Trägers hat; andererseits sind hierbei die Gewichtskräfte von beiden Schlitten, nämlich des x-Schlittens und des y-Schlittens, auszugleichen, wodurch die Einrichtung zum Ausgleich der Gewichtskräfte groß zu dimensionieren und damit kostenintensiv ist.

Bei beiden vorgenannten, zum Stand der Technik gehörenden Lösungen müssen die Einrichtungen zum Ausgleich von Gewichtskräften in der Regel nach oben gerichtete Zugkräfte erzeugen, da die Anbringung von druckkrafterzeugenden Mitteln unterhalb der bewegten Teile in der Regel aus bautechnischen Gründen nicht möglich ist.

Der Erfindung liegt die Aufgabe zugrunde, eine Werkzeugmaschine mit einer Einrichtung zum Ausgleich von vertikal wirkenden Gewichtskräften so auszugestalten, daß die Einrichtung mit geringem konstruktiven Aufwand geschaffen wird, wobei gleichzeitig eine Minimierung der auszugleichenden Gewichtskraft erreicht wird.

Diese Aufgabe wird erfindungsgemäß durch die Merkmale des Anspruches 1 gelöst. Dadurch, daß das Zugmittel unter der Umlenk-Einrichtung, bevorzugt einer Umlenkrolle, geführt wird, wird erreicht, daß das Zugkraft-Erzeugungs-Mittel nicht mit dem auch horizontal in y-Richtung verschiebbaren Tragelement mitwandem muß, sondern insoweit seine Lage gegenüber dem Maschinen-Gestell nicht zu ändern braucht.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: eine Stirnansicht einer Werkzeugmaschine mit einer ersten Einrichtung zum Ausgleich von Gewichtskräften in schematischer Darstellung,
- Fig. 2: die Werkzeugmaschine nach Fig. mit einer zweiten Einrichtung zum Ausgleich von Gewichtskräften in schematischer Darstellung,
- Fig. 3: die Werkzeugmaschine nach Fig. mit einer dritten Einrichtung zum Ausgleich von Gewichtskräften schematischer Darstellung,
- Fig. 4: eine Stirnansicht einer Werkzeugmaschine mit einer der Einrichtung nach Fig. 3 ähnlichen Einrichtung zum Ausgleich von Gewichtskräften in schematischer Darstellung,
- Fig. 5: eine Stirnansicht einer der Werkzeugmaschine nach Fig. 4 ähnlichen Werkzeugmaschine mit einer Einrichtung zum Ausgleich von Gewichtskräften entsprechend der Darstellung in Fig. 4,
- Fig. 6: eine gegenüber den Fig. 1 bis 5 unterschiedliche Werkzeugmaschine mit einer vierten Einrichtung zum Ausgleich von Gewichtskräften,
- Fig. 7: die Werkzeugmaschine nach Fig. 6 mit einer fünften Einrichtung zum Ausgleich von Gewichtskräften und
- Fig. 8a bis 8e: verschiedene Zugkraft-Erzeugungs-Mittel.

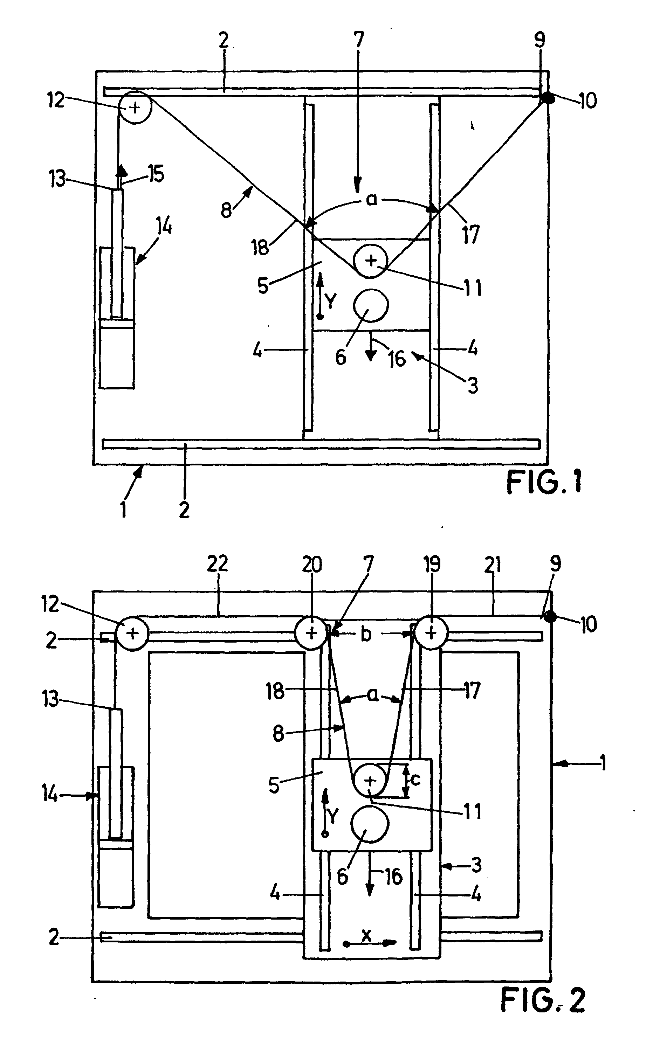

Fig. 1 zeigt eine Werkzeugmaschine mit einem Maschinen-Gestell 1, an dem auf gegenüber dem Gestell 1 ortsfesten horizontalen x-Führungen 2 ein x-Schlitten 3 horizontal in x-Richtung verschiebbar geführt ist. Auf dem x-Schlitten 3 sind wiederum vertikale y-Führungen 4 angebracht, auf denen ein in y-Richtung, also vertikal verschiebbarer y-Schlitten 5 gelagert ist. Der x-Schlitten 3 und der y-Schlitten 5 bilden also einen sogenannten Kreuzschlitten. Auf dem y-Schlitten 5 ist als Träger 6 ein Werkzeug-Träger angebracht, der vielfältig ausgebildet sein kann. Es kann sich beispielsweise um eine drehantreibbare Werkzeugspindel handeln, die ein rotierendes Werkzeug trägt; der Werkzeug-Träger 6 kann aber auch als Träger für ein Handhabungswerkzeug oder ein Spannwerkzeug für ein Werkstück ausgebildet sein. Der Kreuzschlitten bildet also eine Trag- und Führungs-Einrichtung, wobei der y-Schlitten 5 ein Tragelement für den Werkzeug-Träger 6 bildet.

Zur Kompensation der am y-Schlitten 5 angreifenden Gewichtskraft, die im wesentlichen durch das Gewicht des y-Schlittens 5 und das Gewicht des Trägers 6 einschließlich Werkzeugen oder Handhabungs- und Spannwerkzeugen gebildet wird, ist eine Einrichtung 7 zum Ausgleich der von den vertikal verschiebbaren Teilen herrührenden Gewichtskraft vorgesehen. Diese weist ein durch ein Seil, ein Band, eine Kette oder dergleichen gebildetes flexibles Zugmittel 8 auf, dessen erstes Ende 9 in Ausgestaltung nach den Fig. 1 und 2 an einem Befestigungspunkt 10 am Gestell 1 festgelegt ist. Von dort ist das Zugmittel 8 um die Unterseite einer als Umlenk-Einrichtung dienenden Umlenkrolle 11 geführt, die am y-Schlitten 5 frei drehbar gelagert ist. Von dort ist das Zugmittel 8 über eine am Gestell 1 gelagerte Umlenkrolle 12 geführt. An dem unterhalb der Umlenkrolle 12 befindlichen zweiten Ende 13 des Zugmittels 8 greift ein Zugkraft-Erzeugungs-Mittel 14 an, das mit einer Zugkraft 15 auf das Zugmittel 8 wirkt, durch die die am y-Schlit-ten 5 angreifende Gewichtskraft 16 teilweise oder bevorzugt im wesentlichen vollständig kompensiert wird. Wie Fig. 1 erkennen läßt, weist das Zugmittel 8 einen ersten Zugmittel-Abschnitt 17 zwischen dem Befestigungspunkt 10 und der Umlenkrolle 11 und einen zweiten Zugmittel-Abschnitt 18 zwischen der Umlenkrolle 11 und der Umlenkrolle 12 auf. Beide Abschnitte 17, 18 sind - von der Umlenkrolle 11 aus gesehen - nach oben gerichtet. Dies gilt für jede vertikale Position des y-Schlittens 5, d.h. die Unterseite der Umlenkrolle 11 befindet sich in allen vertikalen Positionen des y-Schlittens 5 zumindest geringfügig unter dem Befestigungspunkt 10 bzw. der Oberseite der Umlenkrolle 12.

Bei Horizontal-Verschiebungen des x-Schlittens 3 und bei Vertikal-Verschiebungen des y-Schlittens 5 ändern sich aufgrund der Änderung des Öffnungswinkels a zwischen den Abschnitten 17, 18 die im Zugmittel 8 aufgrund der Gewichtskraft 16 wirkenden Kräfte, so daß die vom Zugkraft-Erzeugungs-Mittel 14 aufzubringende Zugkraft 15 sich ändert oder - wenn das Zugkraft-Erzeugungs-Mittel 14 eine konstante Kraft aufbringt - die am y-Schlitten 5 angreifende Kompensationskraft sich ändert. Dies wird weitgehend unterbunden, wenn am x-Schlitten 3, und zwar in dessen oberem Bereich, zwei obere Umlenkrollen 19, 20 frei drehbar gelagert sind, über die das Zugmittel 8 geführt ist und zu denen der erste Abschnitt 17 und der zweite Abschnitt 18 geführt sind, wobei auch hier gilt, daß in allen Positionen des y-Schlittens 5 die Oberseiten der oberen Umlenkrollen 19, 20 sich oberhalb der Unterseite der Umlenkrolle 11 befinden müssen.

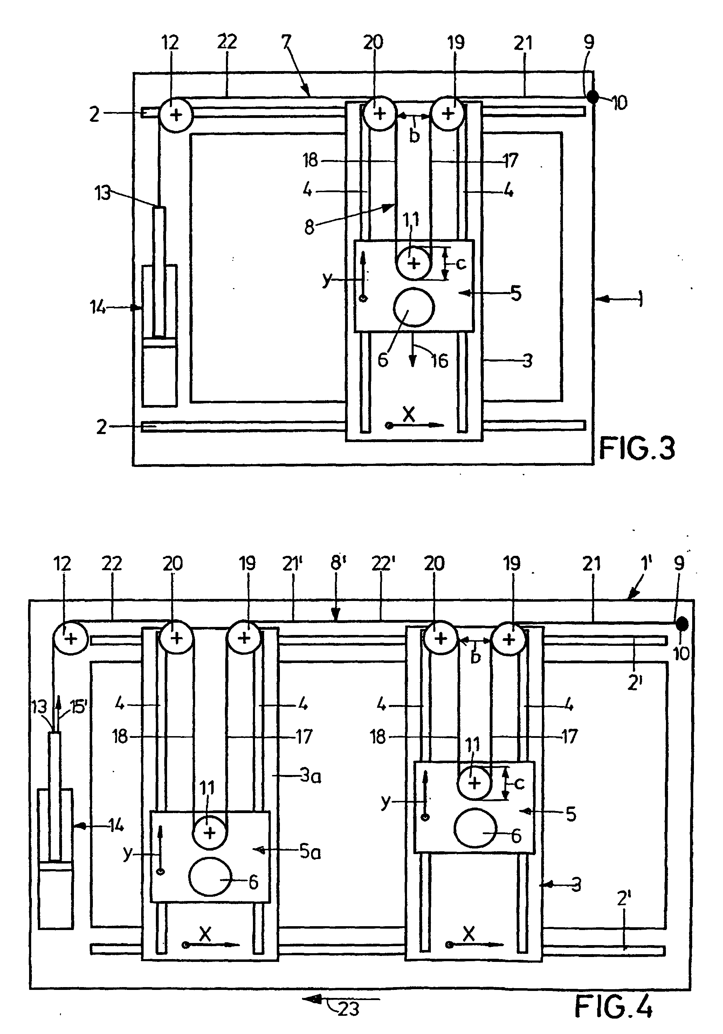

Bei der Ausgestaltung nach Fig. 2 ist noch ein sehr kleiner Öffnungswinkel a zwischen den Abschnitten 17, 18, da der lichte Abstand b der Umlenkrollen 19, 20 größer ist als der Durchmesser c der Umlenkrolle 11. Dieser Winkel a wird größer, wenn der y-Schlitten 5 nach oben in Richtung zu den Umlenkrollen 19, 20 verschoben wird und wird kleiner, wenn der y-Schlitten 5 nach unten verfahren wird. Auch dies führt zu Verschiebungen des zweiten Endes 13 des Zugmittels 8 und zu Veränderungen der im Zugmittel 8 wirkenden Kräfte und somit zu Änderungen der vom Zugkraft-Erzeugungs-Mittel 14 aufzubringenden Kompensationskraft. Dies wird vollends unterbunden, wenn der lichte Abstand b der oberen Umlenkrollen 19, 20 entsprechend der Darstellung in Fig. 3 gleich groß gemacht wird wie der Durchmesser c der Umlenkrolle 11, so daß die Abschnitte 17, 18 in allen vertikalen Positionen des y-Schlittens 5 parallel zueinander verlaufen. Verschiebungen des x-Schlittens 3 führen bei der Ausführung nach den Fig. 2 und 3 ohnehin nicht zu Änderungen der im Zugmittel 8 wirkenden Kräfte, jedenfalls dann, wenn der Befestigungspunkt 10 und die Oberseite der oberen Umlenkrolle 19 einerseits und die Oberseiten der Umlenkrolle 20 und der Umlenkrolle 12 auf der gleichen Höhe liegen, wenn also die zwischen diesen befindlichen dritten und vierten Zugmittel-Abschnitte 21 bzw. 22 zwischen den erwähnten Punkten ausschließlich in x-Richtung verlaufen.

Die Ausführungsform nach Fig. 4 entspricht im wesentlichen der nach Fig. 3, wobei lediglich eine Verdoppelung der x-Schlitten 3 und der y-Schlitten 5 erfolgt ist. Identische Teile werden daher mit den gleichen Bezugsziffern wie zuvor bezeichnet. Funktionell gleiche, lediglich konstruktiv andere Teile werden mit den gleichen Bezugsziffern bezeichnet, die jeweils mit einem hochgesetzten Strich versehen sind. Einer neuen Beschreibung bedarf es insoweit nicht hinsichtlich aller Einzelheiten. Auf dem Maschinen-Gestell 1' sind die x-Führungen 2' angeordnet, auf denen zwei x-Schlitten 3, 3a nebeneinander, d.h. in Durchlaufrichtung 23 zeitlich nacheinander zu bearbeitende Werkstücke hintereinander, angeordnet sind. Sie tragen jeweils einen y-Schlitten 5, 5a mit einem Werkzeug-Träger 6. Es ist nur ein Zugmittel 8' vorgesehen, das nacheinander über die Umlenkrollen 19, 11, 20 des Paares von x-Schlitten 3 und y-Schlitten 5 und dann über die Umlenkrollen 19, 11, 20 des nächsten Paares von x-Schlitten 3a und y-Schlitten 5a geführt sind. Der zwischen den beiden x-Schlitten befindliche Zugmittel-Abschnitt hat für den dem Befestigungspunkt 10 benachbarten x-Schlitten 3 die Funktion des vierten Zugmittel-Abschnitts 22', während er gleichzeitig für benachbarten - in Fig. 4 linken -x-Schlitten 3a die Funktion des dritten Zugmittel-Abschnitts 21' hat.

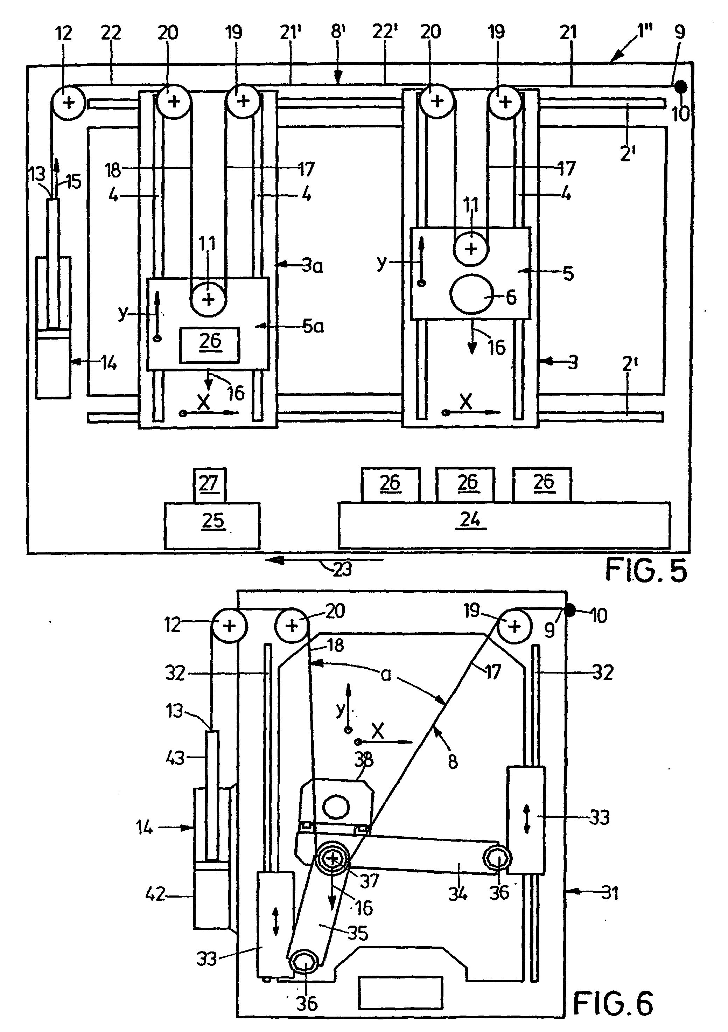

Für die Ausführungsform nach Fig. 5 gilt gleichermaßen, daß gegenüber den vorstehenden Beschreibungen identische Teile mit identischen Bezugsziffern versehen werden. Funktionell gleiche, aber konstruktiv andere Teile werden mit denselben Bezugsziffern bezeichnet, die mit einem hochgesetzten Doppelstrich versehen sind. In Fig. 5 ist noch angedeutet, daß dem Maschinen-Gestell 1" - in Durchlaufrichtung 23 hintereinander - mehrere Bearbeitungsstationen 24, 25 zugeordnet sind. In der Bearbeitungsstation 24 werden die Werkstücke 26 mittels eines am Werkzeug-Träger 6 angebrachten - nicht dargestellten - Werkzeugs bearbeitet. In der Bearbeitungsstation 25 werden die Werkstücke 26 mittels einer am y-Schlitten 5a angebrachten Handhabungs- oder Spanneinrichtung ergriffen und gehalten und mittels eines in der Bearbeitungsstation angebrachten Werkzeugs 27 bearbeitet.

Bei der Ausführungsform nach Fig. 6 ist ein Maschinen-Gestell 31 vorgesehen, an dem zwei in y-Richtung, also vertikal, und parallel zueinander gerichtete y-Führungen 32 vorgesehen sind, auf denen je ein y-Schlitten 33 in y-Richtung verschiebbar angeordnet ist. An diesen Schlitten 33 ist je eine Koppel 34, 35 mittels jeweils eines Gelenks 36 schwenkbar angelenkt. Die beiden Koppeln 34, 35 selber sind wiederum mit einem Verbindungsgelenk 37 miteinander verbunden. An der Koppel 34 ist im Bereich des Verbindungsgelenks 37 ein Werkzeug-Träger 38 angebracht, der also ein Handhabungswerkzeug oder ein Spannwerkzeug tragen kann. Durch unterschiedliche Verschiebung der beiden y-Schlitten 33 in y-Richtung kann der Werkzeug-Träger 38 in y-Richtung und in x-Richtung verschoben werden und somit ein vorgegebenes, nicht dargestelltes Arbeitsfeld überstreichen. Die Achsen der Gelenke 36, 37 verlaufen parallel zueinander und senkrecht zu der durch die x-Richtung und die y-Richtung aufgespannten, in der Zeichnungsebene liegenden x-y-Ebene. Eine derartige Ausgestaltung einer Werkzeugmaschine ist grundsätzlich bekannt aus der EP 0 916 446 A (entsprechend US Ser. No. 09/161,891), worauf insoweit verwiesen werden darf. Bei dieser Ausgestaltung ist die durch die y-Schlitten 33 und die Koppeln 34, 35 mit Gelenken 36, 37 gebildete Trag- und Führungs-Einrichtung ein Tragelement für den Werkzeug-Träger 38.

Es ist wiederum ein Zugmittel 8 vorgesehen, das von einem Befestigungspunkt 10 über eine (hierbei nicht zwingend erforderliche) obere Umlenkrolle 19 am Maschinen-Gestell 31 zu einer Umlenkrolle 11 geführt ist, die (ebenfalls nicht zwingend) achsgleich mit dem Verbindungs-Gelenk 37 der Koppeln 34, 35 angeordnet und damit mit den Koppeln 34, 35 verbunden ist, und das von dort wiederum zu Umlenkrollen 20 und 12 am Maschinen-Gestell 31 geführt ist, wobei es von der Umlenkrolle 12 zu dem Zugkraft-Erzeugungs-Mittel 14 geführt ist. Auch hier gilt - ähnlich wie beim Ausführungsbeispiel nach Fig. 2 -, daß der Öffnungswinkel a zwischen dem ersten Abschnitt 17 und dem zweiten Abschnitt 18 des Zugmittels 8 sich bei Verschiebungen des Werkzeug-Trägers 6 und damit der Umlenkrolle 11 ändert, wodurch Änderungen der im Zugmittel 8 wirkenden Kräfte auftreten, wobei gleichzeitig die durch den Werkzeug-Träger 38 und die Koppeln 34, 35 gebildete zu kompensierende Gewichtskraft 16 sich ändert. Für die Lage des Befestigungspunktes 10 und der Umlenkrollen 19, 11, 20, 12 zueinander gilt das oben zu den Fig. 2 und 3 Gesagte. Soweit gleiche Teile wie in Fig. 1 bis 3 verwendet werden, werden die gleichen Bezugsziffern verwendet, ohne daß es einer neuen Beschreibung bedarf.

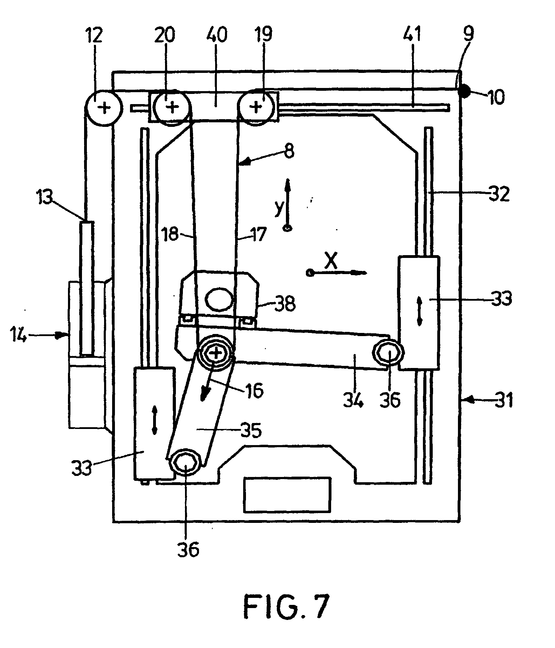

Die Ausführungsform nach Fig. 7 entspricht weitestgehend der nach Fig. 6. Ähnlich der Ausgestaltung nach den Fig. 2 und 3 im Vergleich zu Fig. 1 sind hierbei die oberen Umlenkrollen 19, 20 in eine zumindest angenähert feste Lage in x-Richtung zur Umlenkrolle 11 gebracht. Hierzu sind die beiden oberen Umlenkrollen auf einem Hilfs-Schlitten 40 frei drehbar angeordnet, der wiederum auf einer am Maschinengestell 31 fest angebrachten Schiene 41 in x-Richtung frei verschiebbar ist. Zweckmäßigerweise entspricht auch hierbei der Abstand b der beiden Umlenkrollen 19, 20 dem Durchmesser c der Umlenkrolle 11, so daß die Zugmittel-Abschnitte 17, 18 immer parallel zueinander verlaufen.

Wenn der Werkzeug-Träger 38 aufgrund der Bewegung der y-Schlitten 33 in x-Richtung verschoben wird, dann läuft der Hilfs-Schlitten 40 frei mit. Bei dem in den Fig. 1 bis 7 dargestellten Zugkraft-Erzeugungs-Mittel 14 handelt es sich um eine pneumatisch oder hydraulisch beaufschlagbare Kolben-Zylinder-Einheit, deren Zylinder 42 am Maschinen-Gestell 1, 1" bzw. 31 befestigt ist und an deren Kolbenstange 43 das zweite Ende 13 des Zugmittels 8 bzw. 8' befestigt ist.

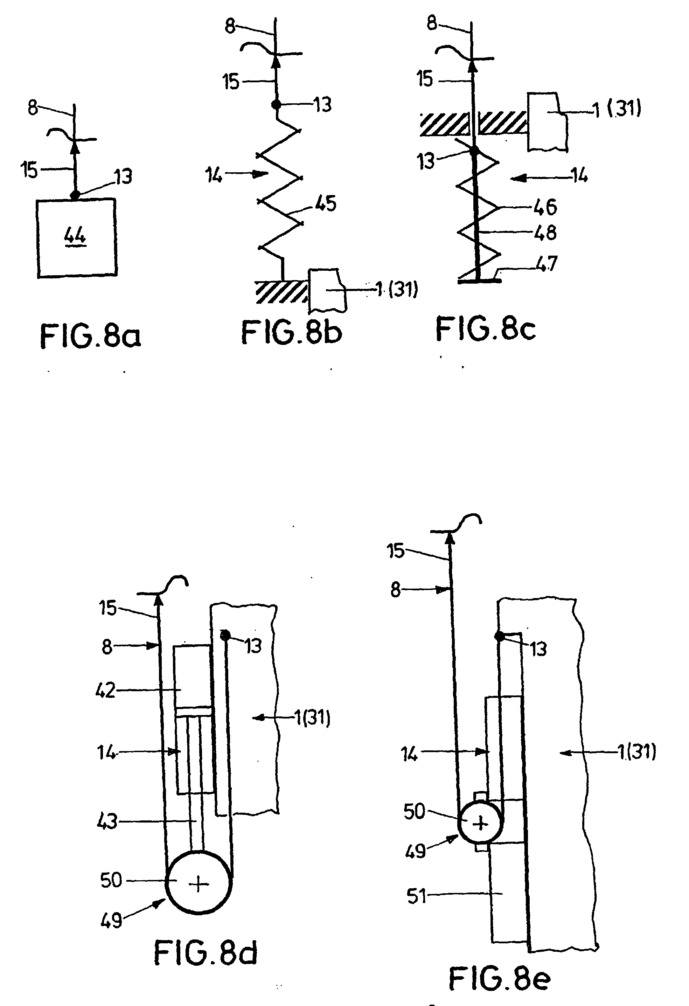

Alternativ kann gemäß Fig. 8a ein einfaches Gegengewicht 44 eingesetzt werden, dessen Gewicht der Zugkraft 15 entspricht. Weiterhin können gemäß den Fig. 8b und 8c mechanische Federn, und zwar Schrauben-Zugfedem 45 oder Schrauben-Druckfedem 46 eingesetzt werden. Die Schrauben-Zugfeder 45 nach Fig. 8b ist mit einem Ende am Maschinen-Gestell 1 bzw. 31 befestigt und mit ihrem anderen Ende am zweiten Ende 13 des Zugmittels 8. Die Schrauben-Druckfeder 46 stützt sich mit einem Ende an einem Teller 47 einer Zugstange 48 ab, an dem das zweite Ende 13 des Zugmittels 8 befestigt ist. Das andere Ende der Druckfeder 46 ist wiederum gegenüber dem Maschinen-Gestell 1 bzw. 31 abgestützt.

Bei der Ausgestaltung des Zugkraft-Erzeugungs-Mittels 14 nach den Fig. 1 bis 7 oder den Fig. 8a bis 8c entspricht der von dem Zugkraft-Erzeugungs-Mittel 14 aufzubringende Weg dem Maß, um das sich das Zugmittel 8 bei Bewegung der Werkzeug-Trägers 6 insbesondere in der Vertikalen, also in y-Richtung, zwischen dem Befestigungspunkt 10 und der Umlenkrolle 12 kürzt oder verlängert. Bei der Ausführung nach den Fig. 3, 4, 5, 7 entspricht dies exakt dem doppelten maximalen Hub der y-Schlitten 5, 5a. Der maximale Hub- oder Verstellweg des Zugkraft-Erzeugungs-Mittels 14 kann halbiert oder weiter verkleinert werden, wenn ein Zugmittel-Übersetzungs-Getriebe 49 zwischen dem Zugkraft-Erzeugungs-Mittel 14 und dem Zugmittel 8 vorgesehen wird. Dies kann gemäß Fig. 8d dadurch geschehen, daß an der Kolbenstange 43 eine Umlenkrolle 50 vorgesehen wird, wobei das hierüber geführte Zugmittel 8 mit seinem zweiten Ende 13 am Maschinen-Gestell 1 bzw. 31 befestigt wird. Hierdurch wird ein Flaschenzug mit einer Übersetzung von 1 : 2 geschaffen. Gemäß Fig. 8e kann dies auch mit einem Zugkraft-Erzeugungs-Mittel 14 geschaffen werden, bei dem ein mit Druckluft oder Druckflüssigkeit beaufschlagter kolbenstangenloser Zylinder 51 vorgesehen wird, der am Maschinen-Gestell 1 bzw. 31 befestigt ist, an dem die das Zugmittel-Übersetzungs-Getriebe 49 bildende Umlenkrolle 50 angebracht ist. Auch hier ist das zweite Ende 13 des Zugmittels 8 am Maschinen-Gestell 1 bzw. 31 befestigt. Selbstverständlich kann der kolbenstangenlose Zylinder 51 auch ohne Zugmittel-Übersetzungs-Getriebe 49 eingesetzt werden.

## Patentansprüche

1. Werkzeugmaschine,
- mit einem Maschinen-Gestell (1; 1'; 1"; 31),
- mit einem Werkzeug-Träger (6; 38),
- mit einer Trag- und Führungs-Einrichtung,
- - die ein den Werkzeug-Träger (6, 38) haltendes, horizontal und vertikal verschiebbar gegenüber dem Maschinen-Gestell (1; 1'; 1"; 31) geführtes Tragelement (5; 5a) aufweist, wobei am Tragelement (5; 5a) eine vertikal wirkende Gewichtskraft (16) angreift und
- mit einer Einrichtung zum Ausgleich der Gewichtskraft (16), die
- - ein Zugkraft-Erzeugungs-Mittel (14),
- - eine mit dem Tragelement (5; 5a) verbundene Umlenk-Einrichtung (11) und
- - ein flexibles Zugmittel (8; 8') aufweist, das erste und zweite Zugmittel-Abschnitte (17, 18) aufweist, wobei mindestens ein Zugmittel-Abschnitt (18) mit dem Zugkraft-Erzeugungs-Mittel (14) verbunden ist, **dadurch gekennzeichnet, daß** ein erstes Ende (9) des Zugmittels (8; 8') mit dem Maschinen-Gestell (1; 1'; 1"; 31) verbunden ist und das flexible Zugmittel
- - - unter der Umlenk-Einrichtung (11) geführt ist und
- - - von der Umlenk-Einrichtung (11) zumindest teilweise nach oben geführt ist.

2. Werkzeugmaschine nach Anspruch 1, **dadurch gekennzeichnet, daß** die Umlenk-Einrichtung als frei drehbare Umlenkrolle (11) ausgebildet ist.

3. Werkzeugmaschine nach Anspruch 1, **dadurch gekennzeichnet, daß** das Tragelement als auf einem horizontal verschiebbaren x-Schlitten (3; 3a) angeordneter vertikal verschiebbarer y-Schlitten (5; 5a) ausgebildet ist.

4. Werkzeugmaschine nach Anspruch 1, **dadurch gekennzeichnet, daß** der erste Zugmittel-Abschnitt (17) und der zweite Zugmittel-Abschnitt (18) nach oben zu oberen Umlenk-Einrichtungen (19, 20) geführt sind.

5. Werkzeugmaschine nach Anspruch 4, **dadurch gekennzeichnet, daß** die oberen Umlenk-Einrichtungen (19, 20) an einem dem Tragelement (5; 5a) zugeordneten horizontal verschiebbaren Schlitten (3; 3a; 40) angeordnet sind.

6. Werkzeugmaschine nach Anspruch 3 und 4, **dadurch gekennzeichnet, daß** die Umlenk-Einrichtungen (19, 20) am x-Schlitten (3; 3a; 40) angeordnet sind.

7. Werkzeugmaschine nach Anspruch 4, **dadurch gekennzeichnet, daß** die oberen Umlenk-Einrichtungen (19, 20) an einem horizontal am Maschinen-Gestell (31) verschiebbar gelagerten Hilfs-Schlitten (40) angeordnet sind.

8. Werkzeugmaschine nach Anspruch 4, **dadurch gekennzeichnet, daß** sich von den oberen Umlenk-Einrichtungen (19, 20) dritte und vierte Zugmittel-Abschnitte (21, 22) horizontal erstrecken.

9. Werkzeugmaschine nach Anspruch 4, **dadurch gekennzeichnet, daß** die ersten und zweiten Zugmittel-Abschnitte (17, 18) parallel zueinander verlaufen.

10. Werkzeugmaschine nach Anspruch 1, **dadurch gekennzeichnet, daß** mehrere Tragelemente (5, 5a) am Maschinen-Gestell (1'; 1") angeordnet sind.

11. Werkzeugmaschine nach Anspruch 1, **dadurch gekennzeichnet, daß** das Zugkraft-Erzeugungs-Mittel (14) durch ein Gegengewicht (44) gebildet ist.

12. Werkzeugmaschine nach Anspruch 1, **dadurch gekennzeichnet, daß** das Zugkraft-Erzeugungs-Mittel (14) durch eine Feder (45, 46) gebildet ist.

13. Werkzeugmaschine nach Anspruch 1, **dadurch gekennzeichnet, daß** das Zugkraft-Erzeugungs-Mittel (14) durch einen druckmittelbeaufschlagbaren Zylinder (42, 51) gebildet ist.

14. Werkzeugmaschine nach Anspruch 1, **dadurch gekennzeichnet, daß** das Zugmittel (8) über ein Zugmittel-Übersetzungs-Getriebe (49) mit dem Zugkraft-Erzeugungs-Mittel (14) verbunden ist.

## Claims

1. A machine tool, comprising
- a machine frame (1; 1'; 1"; 31),
- a tool holding fixture (6; 38);
- a support and guide arrangement,
-- which comprises a support element (5; 5a), which supports the tool holding fixture (6, 38) and is guided for horizontal and vertical displacement relative to the machine frame (1; 1'; 1"; 31), a vertically effective weight (16) acting on the support element (5; 5a); and
- a device for balancing the weight (16), which comprises
-- a traction generating means (14),
-- a deflector (11) joined to the support element (5; 5a), and
-- a flexible traction mechanism (8; 8'), wherein the flexible traction mechanism has first and second traction mechanism sections (17, 18), at least one traction mechanism section (18) being connected with the traction-generating means (14),
**characterized**
**in that** a first end (9) of the traction mechanism (8; 8') is connected with the machine frame (1; 1'; 1"; 31); and
**in that** the flexible traction mechanism is guided underneath the deflector (11); and
**in that** it is guided from the deflector (11) upwards.

2. A machine tool according to claim 1, **characterized in that** the deflector is a freely rotary deflection pulley (11).

3. A machine tool according to claim 1, **characterized in that** the support element is a vertically displaceable y skid (5; 5a) which is disposed on a horizontally displaceable x skid (3; 3a).

4. A machine tool according to claim 1, **characterized in that** the first traction mechanism section (17) and the second traction mechanism section (18) are led upwardly towards top deflectors (19, 20).

5. A machine tool according to claim 4, **characterized in that** the top deflectors (19, 20) are disposed on a horizontally displaceable skid (3; 3a; 40) which is allocated to the support element (5; 5a).

6. A machine tool according to claim 3 and 4, **characterized in that** the deflectors (19, 20) are disposed on the x skid (3; 3a; 40).

7. A machine tool according to claim 4, **characterized in that** the top deflectors (19, 20) are disposed on an auxiliary skid (40) which is mounted for horizontal displacement on the machine frame (31).

8. A machine tool according to claim 4, **characterized in that** third and fourth traction mechanism sections (21, 22) extend horizontally from the top deflectors (19, 20).

9. A machine tool according to claim 4, **characterized in that** the first and second traction mechanism sections (17, 18) are parallel to one another.

10. A machine tool according to claim 1, **characterized in that** several support elements (5, 5a) are disposed on the machine frame (1'; 1").

11. A machine tool according to claim 1, **characterized in that** the traction generating means (14) is formed by a counterweight (44).

12. A machine tool according to claim 1, **characterized in that** the traction generating means (14) is formed by a spring (45, 46).

13. A machine tool according to claim 1, **characterized in that** the traction generating means (14) is formed by a cylinder (42, 51) that is exposable to pressurization.

14. A machine tool according to claim 1, **characterized in that** the traction mechanism (8) is connected to the traction generating means (14) by way of a traction mechanism transmission (49).

## Revendications

1. Machine-outil, comportant
- un bâti de machine (1 ; 1' ; 1'' ; 31),
- un porte outil (6; 38),
- un dispositif de support et de guidage,
-- qui comprend un élément porteur (5 ; 5a) portant le porte-outil (6, 38) et guidé en déplacement horizontal et vertical par rapport au bâti de machine (1 ; 1' ; 1'' ; 31), une force pondérale (16) agissant verticalement attaquant l'élément porteur (5 ; 5a), et
- un dispositif pour équilibrer la force pondérale (16), qui comprend
-- un moyen (14) générant une force de traction,
-- un organe de renvoi (11) relié à l'élément porteur (5 ; 5a), et
-- un organe de traction flexible (8 ; 8') qui comporte des premiers et des seconds tronçons d'organe de traction (17, 18), au moins un tronçon d'organe de traction (18) étant relié au moyen (14) générant la force de traction,
**caractérisée en ce qu'**une première extrémité (9) de l'organe de traction (8 ; 8') est reliée au bâti de machine (1 ; 1' ; 1'' ; 31), et **en ce que** l'organe de traction flexible
--- est guidé au-dessous de l'organe de renvoi (11) et
--- est guidé depuis l'organe de renvoi (11) au moins partiellement vers le haut.

2. Machine-outil selon la revendication 1, **caractérisée en ce que** l'organe de renvoi est réalisé sous forme de galet de renvoi (11) en rotation libre.

3. Machine-outil selon la revendication 1, **caractérisée en ce que** l'élément porteur est réalisé sous la forme d'un chariot y (5 ; 5a) agencé verticalement mobile sur un chariot x (3 ; 3a) mobile horizontalement.

4. Machine-outil selon la revendication 1, **caractérisée en ce que** le premier tronçon d'organe de traction (17) et le second tronçon d'organe de traction (18) sont guidés vers le haut vers des organes de renvoi supérieurs (19, 20).

5. Machine-outil selon la revendication 4, **caractérisée en ce que** les organes de renvoi supérieurs (19, 20) sont agencés sur un chariot (3 ; 3a ; 40) mobile horizontalement et associé à l'élément porteur (5 ; 5a).

6. Machine-outil selon les revendications 3 et 4, **caractérisée en ce que** les organes de renvoi (19, 20) sont agencés sur le chariot x (3 ; 3a ; 40).

7. Machine-outil selon la revendication 4, **caractérisée en ce que** les organes de renvoi supérieurs (19, 20) sont agencés sur un chariot auxiliaire (40) monté mobile horizontalement sur le bâti de machine (31).

8. Machine-outil selon la revendication 4, **caractérisée en ce que** des troisièmes et des quatrièmes tronçons d'organe de traction (21, 22) s'étendent horizontalement à partir des organes de renvoi supérieurs (19, 20).

9. Machine-outil selon la revendication 4, **caractérisée en ce que** les premiers et les secondes tronçons d'organe de traction (17, 18) s'étendent parallèlement les uns aux autres.

10. Machine-outil selon la revendication 1, **caractérisée en ce que** plusieurs éléments porteurs (5, 5a) sont agencés sur le bâti de machine (1' ; 1'').

11. Machine-outil selon la revendication 1, **caractérisée en ce que** le moyen (14) générant la force de traction est formé par un contre-poids (44).

12. Machine-outil selon la revendication 1, **caractérisée en ce que** le moyen (14) générant la force de traction est formé par un ressort (45, 46).

13. Machine-outil selon la revendication 1, **caractérisée en ce que** le moyen (14) générant la force de traction est formé par un cylindre (42, 51) susceptible d'être alimenté en fluide sous pression.

14. Machine-outil selon la revendication 1, **caractérisée en ce que** l'organe de traction (8) est relié au moyen (14) générant la force de traction via un mécanisme de transmission d'organe de traction (49).
